# EUROPÄISCHE PATENTANMELDUNG

(11) **EP 3 095 631 A1**
(43) Veröffentlichungstag der Anmeldung: **23.11.2016**
(21) Anmeldenummer: 15168579.9
(22) Anmeldetag: 21.05.2015
(51) Int. Cl.: B60K 6/48, B60K 6/365, B60K 6/547, F16H 3/72

(54) **GETRIEBE FÜR EIN HYBRIDFAHRZEUG, UND ANTRIEBSSTRANG FÜR EIN HYBRIDFAHRZEUG**

(71) Anmelder: ZF Friedrichshafen AG, 88046 Friedrichshafen (DE)
(72) Erfinder: Roske, Michael, 88046 Friedrichshafen (DE)

(57) **Zusammenfassung**

Getriebe (G) für ein Hybridfahrzeug, wobei das Getriebe (G) eine Antriebswelle (GW1), eine Abtriebswelle (GW2), eine elektrische Maschine (EM) mit einem drehfesten Stator (S) und einem drehbaren Rotor (R), einen Radsatz (RS) mit einem ersten und einem zweiten Planetenradsatz (P1, P2), welche zusammen vier in der Reihenfolge ihrer Drehzahlordnung als erste, zweite, dritte und vierte Welle bezeichnete Wellen (W1, W2, W3, W4) aufweisen, sowie zumindest ein erstes, zweites, und drittes Schaltelement (A, B, D) aufweist, wobei durch selektives paarweises Schließen der Schaltelemente (A, B, D) eine Mehrzahl an Vorwärtsgängen (G1-G3) zwischen den Antriebswelle (GW1) und der Abtriebswelle (GW2) schaltbar sind, wobei die Antriebswelle (GW1) über das erste Schaltelement (A) mit der ersten Welle (W1) und über das zweite Schaltelement (B) mit der dritten Welle (W3) verbindbar ist, wobei die zweite Welle (W2) mit der Abtriebswelle (GW2) ständig drehfest verbunden ist, wobei die vierte Welle (W4) über das dritte Schaltelement (D) drehfest festsetzbar ist, und wobei der Rotor (R) der elektrischen Maschine (EM) mit der dritten Welle (W3) über ein festes Übersetzungsverhältnis ständig wirkverbunden ist.

## Beschreibung

Die Erfindung betrifft ein Getriebe für ein Hybridfahrzeug, sowie einen Antriebsstrang für ein Hybridfahrzeug mit einem solchen Getriebe.

Ein Getriebe bezeichnet hier insbesondere ein mehrgängiges Getriebe, bei dem eine Vielzahl von Gängen, also festen Übersetzungsverhältnisse zwischen einer Antriebswelle und einer Abtriebswelle, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Aus der Patentanmeldung DE 10 2013 002 587 A1 ist eine Hybridantriebsvorrichtung für ein Kraftfahrzeug bekannt, welche eine Brennkraftmaschine, eine Elektromaschine und zwei Planetenradsätze aufweist. Der Rotor der Elektromaschine ist dabei mit einer Eingangswelle ständig drehfest verbunden. Die Brennkraftmaschine ist über eine Trennkupplung mit der Eingangswelle verbindbar. Durch zwei Bremsen und zwei Kupplungen sind vier Übersetzungsstufen zwischen der Eingangswelle und einer Abtriebswelle herstellbar.

Zur Darstellung eines Anfahrvorgangs ausgehend von einem verbrennungsmotorischen oder hybridischen Betrieb mit der aus dem Stand der Technik bekannten Hybridantriebsvorrichtung muss entweder die Trennkupplung oder einer der am Anfahrgang beteiligten Kupplungen, bzw. Bremsen in einem geregelten Schlupf betrieben werden. Dies ist technisch aufwändig, da das Anfahrverhalten des Kraftfahrzeugs durch unvermeidliche Reibwertschwankungen und Ungenauigkeiten in der Regelung negativ beeinflusst werden kann. Zudem ist üblicherweise eine besondere Kühlung der schlupfenden Kupplung oder Bremse erforderlich, wodurch der Bauaufwand der Vorrichtung steigt.

Es ist daher Aufgabe der Erfindung ein Getriebe für ein Kraftfahrzeug bereitzustellen, welches ein Anfahren ohne Schlupfbetrieb der Schaltelemente ermöglicht.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das Getriebe weist eine Antriebswelle, eine Abtriebswelle, eine elektrische Maschine mit einem drehfesten Stator und einem drehbaren Rotor, einen Radsatz sowie zumindest drei Schaltelemente auf. Der Radsatz weist einen ersten und zweiten Planetenradsatz auf, welche zusammen insgesamt vier, in Drehzahlordnung als erste, zweite, dritte und vierte Welle bezeichnete Wellen aufweisen. Der Radsatz ist somit als ein Zwei-Steg-Vier-Wellen-Getriebe ausgebildet.

Unter einem Zwei-Steg-Vier-Wellen-Getriebe ist ein Planetengetriebe zu verstehen, das aus zwei über genau zwei Koppelwellen kinematisch miteinander gekoppelten Einzel-Planetenradsätzen gebildet ist und bei dem vier seiner Elemente ("Wellen") für andere Getriebeelemente frei zugänglich sind. Eine Koppelwelle ist dabei als ständige mechanische Verbindung zwischen einem Element - also Sonnenrad oder Steg oder Hohlrad - des ersten Einzel-Planetenradsatzes mit einem Element - also Sonnenrad oder Steg oder Hohlrad - des zweiten Einzel-Planetenradsatzes definiert. Die Anzahl der Einzel-Planetenradsätze und die Anzahl der freien Wellen sind nicht über das optische Erscheinungsbild des Getriebes definiert, sondern über dessen Kinematik. Zur graphischen Darstellung der Kinematik des Getriebes wird üblicherweise ein Drehzahlplan des Getriebes verwendet, beispielsweise den aus der Getriebelehre bekannten Kutzbachplan.

Vier in der Reihenfolge ihrer Drehzahlordnung als erste, zweite, dritte und vierte Welle bezeichnete Wellen sind dadurch gekennzeichnet, dass die Drehzahlen dieser Wellen in der genannten Reihenfolge linear ansteigen, abnehmen oder gleich sind. In anderen Worten ist die Drehzahl der ersten Welle kleiner gleich der Drehzahl der zweiten Welle. Die Drehzahl der zweiten Welle ist wiederum kleiner gleich der Drehzahl der dritten Welle. Die Drehzahl der dritten Welle ist kleiner gleich der Drehzahl der vierten Welle. Diese Reihenfolge ist auch reversibel, sodass die vierte Welle die kleinste Drehzahl aufweist, während die erste Welle eine Drehzahl annimmt die größer oder gleich groß wie die Drehzahl der vierten Welle ist. Zwischen den Drehzahlen aller vier Wellen besteht dabei stets ein linearer Zusammenhang.

Durch selektives paarweises Schließen der drei Schaltelemente sind eine Mehrzahl von Vorwärtsgängen, also feste Übersetzungsverhältnisse zwischen der Antriebswelle und der Abtriebswelle, schaltbar. Die Antriebswelle ist dazu über das erste Schaltelement mit der ersten Welle des Radsatzes und über das zweite Schaltelement mit der dritten Welle des Radsatzes verbindbar. Die zweite Welle des Radsatzes ist mit der Abtriebswelle ständig verbunden. Die vierte Welle des Radsatzes ist über das dritte Schaltelement drehfest festsetzbar, indem sie über das dritte Schaltelement an ein Gehäuse oder an ein anderes drehfestes Bauelement des Getriebes schaltbar angebunden ist. Der Rotor der elektrischen Maschine ist über ein festes Übersetzungsverhältnis mit der dritten Welle des Radsatzes ständig wirkverbunden.

Durch diese Zuordnung der Getriebeelemente wird ein elektrodynamischer Anfahrmodus ermöglicht. Durch Schließen des ersten Schaltelements ist die Antriebswelle mit der ersten Welle des Radsatzes verbunden. Durch Offenhalten der übrigen an der Gangbildung beteiligten Schaltelemente ergibt sich ohne weiteres keine feste Drehzahlbeziehung zwischen den vier Wellen des Radsatzes. Erst durch Aufbringen eines Abstützmoments durch die elektrische Maschine an der dritten Welle ergibt sich eine feste Drehzahlbeziehung zwischen den vier Radsatzwellen. Durch Variation der Rotordrehzahl und der an der Antriebswelle anliegenden Drehzahl kann somit die Drehzahl der Abtriebswelle stufenlos verändert werden, wodurch ein Anfahrvorgang darstellbar ist. Gleichzeitig ermöglicht das Getriebe auch feste Übersetzungsverhältnisse zwischen Antriebswelle und Abtriebswelle, sowie zwischen dritter Welle und Abtriebswelle. Dadurch stehen für das Hybridfahrzeug auch feste Gänge zur verbrennungsmotorischen Fahrt sowie zur rein elektrischen Fahrt zur Verfügung.

Vorzugsweise sind erster und zweiter Planetenradsatz als Minus-Radsätze ausgebildet. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren. Erster und zweiter Planetenradsatz sind zusammen als ein sogenannter Simpson-Radsatz ausgebildet, also mit verbundenen Sonnenrädern und einer Steg-Hohlrad-Koppelung. Die Sonnenräder der beiden Planetenradsätze sind dabei Bestandteil der ersten Welle des Radsatzes. Der Steg des zweiten Planetenradsatzes ist Bestandteil der zweiten Welle des Radsatzes. Der Steg des ersten Planetenradsatzes und das Hohlrad des zweiten Planetenradsatzes sind Bestandteile der dritten Welle des Radsatzes. Das Hohlrad des zweiten Planetenradsatzes ist Bestandteil der vierten Welle des Radsatzes. Ein derartig aufgebauter Radsatz zeichnet sich durch eine einfache Baubarkeit, durch einen guten Wirkungsgrad sowie durch kompakte Außenabmessungen aus.

Die feste Übersetzung zwischen der dritten Welle des Radsatzes und dem Rotor der elektrischen Maschine kann durch eine ständige drehfeste Verbindung gebildet sein. Alternativ dazu kann die feste Übersetzung zwischen der dritten Welle des Radsatzes und dem Rotor auch durch eine oder mehrere Stirnradstufen erzielt werden. Die elektrische Maschine kann dabei achsparallel zur Hauptachse des Getriebes angeordnet sein. Vorzugsweise ist die Übersetzung der zumindest einen Stirnradstufe so gewählt, dass die Drehzahl des Rotors höher ist als die Drehzahl der dritten Radsatzwelle. Dadurch wird die elektrische Maschine mit höherer Drehzahl betrieben, wodurch sie bei gleichem Soll-Moment kleiner ausgeführt werden kann.

Gemäß einer alternativen Ausführung wird die feste Übersetzung zwischen der dritten Welle des Radsatzes und dem Rotor der elektrischen Maschine durch einen dritten Planetenradsatz gebildet, welcher ein erstes, ein zweites und ein drittes Element aufweist. Das erste Element ist ein Sonnenrad des dritten Planetenradsatzes. Das zweite Element ist ein Steg des dritten Planetenradsatzes, sofern dieser als Minus-Radsatz ausgebildet ist. Ist der dritte Planetenradsatz als Plus-Radsatz ausgebildet, so bildet ein Hohlrad das zweite Element des dritten Planetenradsatzes. Das dritte Element ist das Hohlrad des dritten Planetenradsatzes, sofern dieser als Minus-Radsatz ausgebildet ist. Ist der dritte Planetenradsatz als Plus-Radsatz ausgebildet, so bildet der Steg das dritte Element des dritten Planetenradsatzes. Die dritte Radsatzwelle ist ständig mit dem zweiten Element des dritten Planetenradsatzes verbunden. Der Rotor ist entweder mit dem ersten oder mit dem dritten Element des dritten Planetenradsatzes verbunden. Das verbleibende Element des dritten Planetenradsatzes ist ständig drehfest festgesetzt. Durch diese Zuordnung der Elemente des dritten Planetenradsatzes ist die Rotordrehzahl stets höher als die Drehzahl der dritten Radsatzwelle, wodurch der Bauraumbedarf der elektrischen Maschine reduzierbar ist. Vorzugsweise sind die drei Planetenradsätze in folgender axialer Reihenfolge angeordnet: erster Planetenradsatz, zweiter Planetenradsatz, dritter Planetenradsatz.

Durch selektives paarweises Betätigen der drei Schaltelemente sind insgesamt drei Vorwärtsgänge zwischen der Antriebswelle und der Abtriebswelle schaltbar. Der erste Vorwärtsgang wird durch Schließen des ersten Schaltelements und des dritten Schaltelements gebildet. Der zweite Vorwärtsgang wird durch Schließen des ersten Schaltelements und des zweiten Schaltelements gebildet. Der dritte Vorwärtsgang wird durch Schließen des zweiten Schaltelements und des dritten Schaltelements gebildet. Durch diese Zuordnung der Schaltelemente zu den einzelnen Vorwärtsgängen wird, bei geeigneter Wahl der Standgetriebeübersetzung der Planetenradsätze, eine für die Anwendung im Kraftfahrzeug gut geeignete Übersetzungsreihe erzielt. Zudem weisen zwei benachbarte Gänge stets ein Schaltelement auf, das in beiden diesen Gängen geschlossen ist. Bei einem Schaltvorgang in einen benachbarten Gang muss daher nur ein Schaltelement geöffnet und ein Schaltelement geschlossen werden. Dies vereinfacht den Schaltvorgang und verkürzt die Schaltdauer.

In einem ersten elektrodynamischen Betriebsmodus ist das erste Schaltelement geschlossen, und alle weiteren an der Gangbildung beteiligten Schaltelemente sind geöffnet. Dadurch kann die Abtriebsdrehzahl bei vorgegebener Drehzahl der Antriebswelle und Variation der Rotordrehzahl stufenlos verändert werden. Somit kann ein stufenloser Betrieb des Getriebes bereitgestellt werden.

Gemäß einer Ausführungsform ist die Antriebswelle über ein viertes Schaltelement mit der vierten Welle des Radsatzes verbindbar. In einem zweiten elektrodynamischen Betriebsmodus ist dieses vierte Schaltelement geschlossen, und alle weiteren an der Gangbildung beteiligten Schaltelemente sind geöffnet. Dadurch kann die Abtriebsdrehzahl bei vorgegebener Drehzahl der Antriebswelle und Variation der Rotordrehzahl stufenlos verändert werden. Somit kann ein stufenloser Betrieb des Getriebes bereitgestellt werden. Mittels des zweiten elektrodynamischen Betriebsmodus ist eine Drehrichtungsumkehr zwischen Antriebswelle und Abtriebswelle erreichbar, wodurch das Getriebe einen elektrodynamischen Rückwärtsfahrmodus erhält. Dies verbessert die Funktionalität des Getriebes.

Vorzugsweise ergibt sich ein erster elektrischer Gang zwischen der dritten Welle und der Abtriebswelle durch Schließen des ersten Schaltelements und des zweiten Schaltelements. Bei Anwendung des Getriebes im Antriebsstrang eines Kraftfahrzeugs ist somit ein rein elektrischer Antrieb des Kraftfahrzeugs mit konstantem Übersetzungsverhältnis zwischen elektrischer Maschine und Abtriebswelle möglich.

Vorzugsweise ergibt sich ein zweiter elektrischer Gang zwischen der dritten Welle und der Abtriebswelle durch Schließen des dritten Schaltelements. Auch der zweite elektrische Gang ermöglicht einen reinen elektrischen Antrieb eines Kraftfahrzeugs mittels der elektrischen Maschine des Getriebes. Der zweite elektrische Gang kann dabei ergänzend oder alternativ zum ersten elektrischen Gang vorgesehen sein.

Vorzugsweise ist im zweiten elektrischen Gang zusätzlich das erste Schaltelement oder das zweite Schaltelement geschlossen. Dies erleichtert einen Schaltvorgang zwischen erstem und zweitem elektrischen Gang, da bei einem solchen Schaltvorgang nur ein Schaltelement zu öffnen und ein Schaltelement zu schließen ist. Ein solcher Schaltvorgang kann unter Last stattfinden, sofern die beteiligten Schaltelemente als kraftschlüssige Schaltelemente mit variabler Drehmomentübertragungsfähigkeit ausgebildet sind.

Vorzugsweise weist das Getriebe eine Anschlusswelle auf, welche als Schnittstelle zu einer Verbrennungskraftmaschine ausgebildet sein kann. Die Anschlusswelle kann dabei auch einen Torsionsschwingungsdämpfer aufweisen. Die Anschlusswelle ist über ein fünftes Schaltelement mit der Antriebswelle verbindbar. Durch Öffnen des fünften Schaltelements ist ein rein elektrischer Antrieb des Kraftfahrzeugs durch die elektrische Maschine des Getriebes möglich, ohne die mit der Anschlusswelle verbundene Antriebseinheit mitzuschleppen. Das fünfte Schaltelement kann als kraftschlüssiges oder als formschlüssiges Schaltelement ausgebildet sein.

Durch Schließen des zweiten Schaltelements und des fünften Schaltelements wird eine Wirkverbindung zwischen der Anschlusswelle und der elektrischen Maschine hergestellt, ohne auf die Abtriebswelle rückzuwirken. Dadurch wird ein Standladebetriebsmodus bereitgestellt, bei dem die Verbrennungskraftmaschine durch generatorischen Betrieb der elektrischen Maschine einen Energiespeicher im Stillstand des Kraftfahrzeugs aufladen kann.

Das Getriebe kann eine zweite elektrische Maschine aufweisen, dessen Rotor mit der Anschlusswelle ständig verbunden ist. Dadurch kann die Funktionalität des Getriebes weiter gesteigert werden, beispielsweise um einen Start eines mit der Anschlusswelle verbundenen Antriebsaggregates zu ermöglichen während das fünfte Schaltelement geöffnet ist.

Weist das Getriebe das fünfte Schaltelement auf, so ist das fünfte Schaltelement im ersten und zweiten elektrischen Gang geöffnet. Dies reduziert die Schleppverluste, da die Anschlusswelle und eine damit verbundene Antriebseinheit im ersten und zweiten elektrischen Gang nicht mitgeschleppt werden müssen.

Das Getriebe kann Bestandteil eines Antriebsstrangs eines Hybridfahrzeugs sein. Der Antriebsstrang weist neben dem Getriebe auch eine Verbrennungskraftmaschine auf, welche mit der Anschlusswelle des Getriebes verbunden ist. Die Abtriebswelle des Getriebes ist mit einem Achsgetriebe verbunden, welcher mit Rädern des Hybridfahrzeugs verbunden ist. Der Antriebsstrang ermöglicht mehrere Antriebsmodi des Hybridfahrzeugs. In einem elektrischen Fahrbetrieb wird das Hybridfahrzeug von der elektrischen Maschine des Getriebes angetrieben, wobei das fünfte Schaltelement geöffnet ist. In einem verbrennungsmotorischen Betrieb wird das Hybridfahrzeug von der Verbrennungskraftmaschine angetrieben, wobei das fünfte Schaltelement geschlossen ist. In einem hybridischen Betrieb wird das Hybridfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Zwei Elemente werden als verbindbar bezeichnet, wenn zwischen diesen Elementen eine durch ein Schaltelement lösbare drehfeste Verbindung besteht. Wenn die Verbindung besteht, so drehen solche Elemente mit der gleichen Drehzahl.

Ausführungsbeispiele der Erfindung sind nachfolgend anhand der beigefügten Figuren detailliert beschrieben.
- Fig. 1: zeigt schematisch ein Getriebe entsprechend eines ersten Ausführungsbeispiels der Erfindung.
- Fig. 2: zeigt ein Schaltschema des Getriebes gemäß dem ersten Ausführungsbeispiel.
- Fig. 3: zeigt schematisch ein Getriebe entsprechend eines zweiten Ausführungsbeispiels der Erfindung.
- Fig. 4: zeigt ein Schaltschema des Getriebes gemäß dem zweiten Ausführungsbeispiel.
- Fig. 5: zeigt einen Drehzahlplan des Getriebes gemäß dem dritten Ausführungsbeispiels der Erfindung.
- Fig. 6: zeigt schematisch ein Getriebe entsprechend eines dritten Ausführungsbeispiels der Erfindung.
- Fig. 7: zeigt schematisch ein Getriebe entsprechend eines vierten Ausführungsbeispiels der Erfindung.
- Fig. 8: zeigt schematisch ein Getriebe entsprechend eines fünften Ausführungsbeispiels der Erfindung.
- Fig. 9: zeigt einen Antriebstrang eines Hybridfahrzeugs.

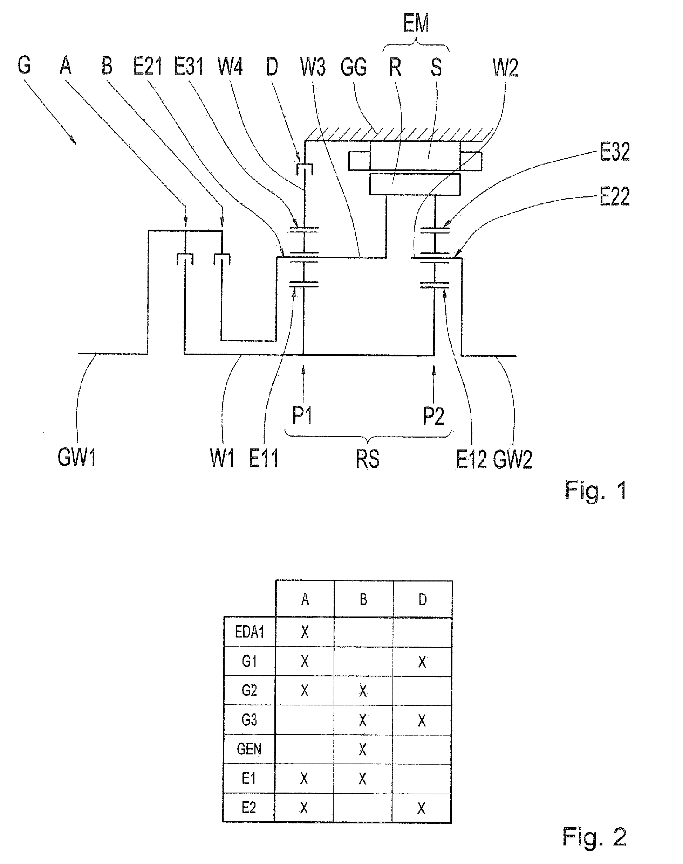

Figur 1 zeigt schematisch ein Getriebe G entsprechend eines ersten Ausführungsbeispiels der Erfindung. Das Getriebe G weist einen ersten Planetenradsatz P1 und einen zweiten Planetenradsatz P2 auf, welche gemeinsam einen Radsatz RS bilden. Die beiden Planetenradsätze P1, P2 sind als Minusradsätze ausgebildet und bilden zusammen einen sogenannten Simpson-Radsatz. Ein Sonnenrad E11 des ersten Planetenradsatzes P1 ist mit einem Sonnenrad E12 des zweiten Planetenradsatzes P2 ständig verbunden. Ein Steg E21 des ersten Planetenradsatzes P1 ist mit einem Hohlrad E32 des zweiten Planetenradsatzes P2 ständig verbunden. Durch diese doppelte Koppelung der beiden Planetenradsätze P1, P2 weist der Radsatz RS insgesamt vier Wellen auf, welche in ihrer Drehzahlordnung als erste Welle W1, zweite Welle W2, dritte Welle W3, vierte Welle W4 bezeichnet sind. Das Sonnenrad E11 des ersten Planetenradsatzes P1 und das Sonnenrad E12 des zweiten Planetenradsatzes P2 sind Bestandteile der ersten Welle W1. Ein Steg E22 des zweiten Planetenradsatzes P2 ist Bestandteil der zweiten Welle W2. Der Steg E21 des ersten Planetenradsatzes P1 und das Hohlrad E32 des zweiten Planetenradsatzes P2 sind Bestandteile der dritten Welle W3. Ein Hohlrad E31 des ersten Planetenradsatzes P1 ist Bestandteil der vierten Welle W4. Eine Antriebswelle GW1 ist über ein erstes Schaltelement A mit der ersten Welle W1 des Radsatzes RS verbindbar. Die Antriebswelle GW1 ist über ein zweites Schaltelement B mit der dritten Welle W3 des Radsatzes RS verbindbar. Die vierte Welle W4 des Radsatzes RS ist über ein drittes Schaltelement D drehfest festsetzbar, indem sie schaltbar an ein Gehäuse GG oder an ein anderes drehfestes Bauelement des Getriebes G anbindbar ist. Die zweite Welle W2 des Radsatzes RS ist mit einer Abtriebswelle GW2 ständig verbunden. Das Getriebe G weist ferner eine elektrische Maschine EM mit einem drehfesten Stator S und einem drehbaren Rotor R auf. Der Rotor R ist mit der dritten Welle W3 des Radsatzes RS ständig verbunden.

Figur 2 zeigt ein Schaltschema des Getriebes G gemäß dem ersten Ausführungsbespiel. In den Zeilen des Schaltschemas sind ein erster elektrodynamischer Betriebsmodus EDA1, drei Vorwärtsgänge G1 bis G3, ein Standladebetriebsmodus GEN sowie ein erster und zweiter elektrischer Gang E1, E2 angegeben. In den Spalten des Schaltschemas ist durch ein X angegeben, welche Schaltelemente A, B, D in welchem Gang, beziehungsweise Betriebsmodus geschlossen sind. In den Vorwärtsgängen G1 bis G3 sind jeweils zwei der drei Schaltelemente A, B, D geschlossen. Dadurch ergibt sich in den drei Vorwärtsgängen G1, G2, G3 ein festes Übersetzungsverhältnis zwischen Antriebswelle GW1 und Abtriebswelle GW2. Im ersten elektrodynamischen Betriebsmodus EDA1 ist hingegen nur das erste Schaltelement A geschlossen. Dadurch sind die Elemente Antriebswelle GW1, Abtriebswelle GW2 und Rotor R der elektrischen Maschine EM an je einem Element des zweiten Planetenradsatzes P2 angebunden. Bringt die elektrische Maschine EM dabei kein Moment auf, so kann keine Leistung von der Antriebswelle GW1 zur Abtriebswelle GW2 übertragen werden. Erst durch Aufbringen eines Stützmoments mittels der elektrischen Maschine EM ist im ersten elektrodynamischen Betriebsmodus EDA1 eine Leistungsübertragung über den zweiten Planetenradsatz P2 möglich. Durch Variation der Rotordrehzahl und gegebener Antriebswellendrehzahl ist somit ein Anfahrvorgang darstellbar. Durch Schließen des zweiten Schaltelements B und Offenhalten der übrigen Schaltelemente A, D im Standladebetriebsmodus GEN ist die Antriebswelle GW1 mit dem Rotor R der elektrischen Maschine EM verbunden, ohne dass eine Leistung von der Antriebswelle GW1 auf die Abtriebswelle GW2 übertragen wird. Dadurch kann eine mit der Antriebswelle GW1 verbundene Verbrennungskraftmaschine durch generatorischen Betrieb der elektrischen Maschine EM einen Energiespeicher laden, ohne auf den Abtrieb rückzuwirken. Die elektrischen Gänge E1, E2 beziehen sich auf ein festes Übersetzungsverhältnis zwischen der dritten Welle W3 des Radsatzes RS und der Abtriebswelle GW2.

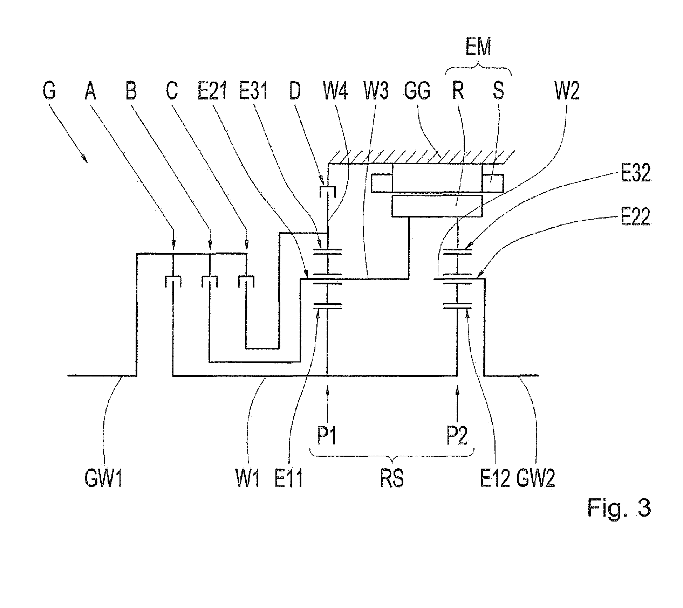

Figur 3 zeigt schematisch ein Getriebe G entsprechend eines zweiten Ausführungsbeispiels der Erfindung. Im Unterschied zu dem in Figur 1 dargestellten ersten Ausführungsbeispiel weist das Getriebe G gemäß dem zweiten Ausführungsbeispiel ein viertes Schaltelement C auf. Durch Schließen des vierten Schaltelements C ist die Antriebswelle GW1 mit der vierten Welle W4 des Radsatzes RS verbindbar.

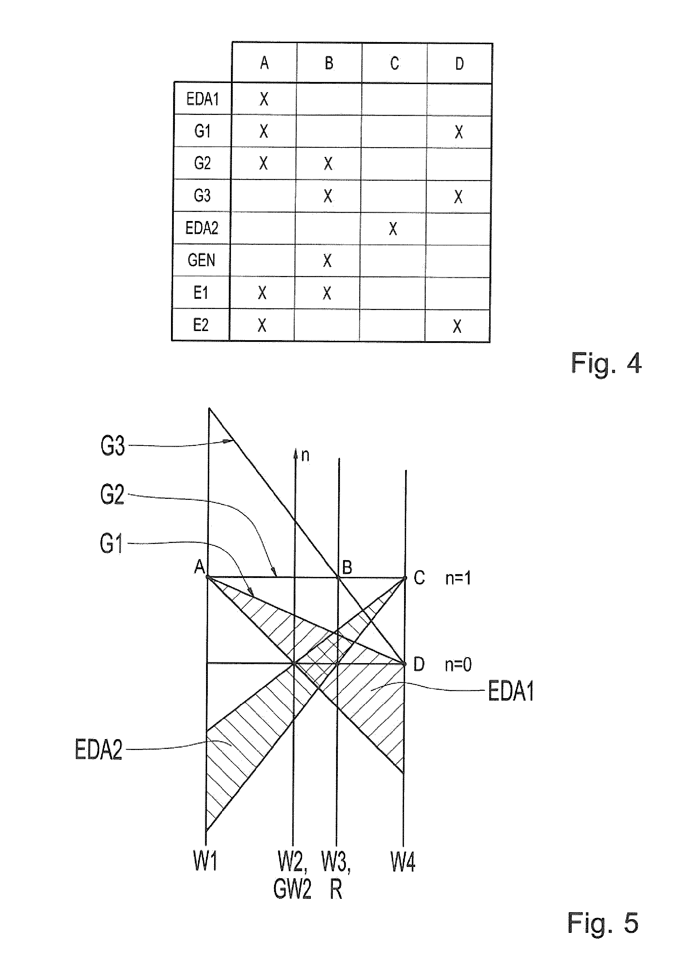

Figur 4 zeigt ein Schaltschema des Getriebes G gemäß dem zweiten Ausführungsbeispiel. Das vierte Schaltelement C ist lediglich in einem zweiten elektrodynamischen Betriebsmodus EDA2 geschlossen, und ist sonst in allen Vorwärtsgängen G1 bis G3, beziehungsweise Betriebsmodi geöffnet. Im zweiten elektrodynamischen Betriebsmodus EDA2 ist bis auf das vierte Schaltelement C keines der übrigen Schaltelemente A, B, D geschlossen. Somit ist auch im zweiten elektrodynamischen Betriebsmodus EDA2 eine Leistungsübertragung zwischen Antriebswelle GW1 und Abtriebswelle GW2 nur dann möglich, wenn die dritte Welle W3 des Radsatzes RS durch die elektrische Maschine EM abgestützt wird.

Figur 5 zeigt einen Drehzahlplan des zweiten Ausführungsbeispiels des Getriebes G. Im Drehzahlplan sind in vertikaler Richtung die Drehzahlen n der vier Wellen W1, W2, W3, W4 des Radsatzes RS im Verhältnis zur Drehzahl der Antriebswelle GW1 aufgetragen. Die maximal auftretende Drehzahl der Antriebswelle GW1 ist auf den Wert Eins normiert. Die Abstände zwischen den vier Wellen W1, W2, W3, W4 ergeben sich durch die Standgetriebeübersetzungen des ersten und zweiten Planetenradsatzes P1, P2. Die Darstellung dient nur zur Anschauung und ist nicht maßstäblich. Zu einem bestimmten Betriebspunkt gehörende Drehzahlverhältnisse lassen sich durch eine Gerade verbinden. Die durch die beiden elektrodynamischen Betriebsmodi EDA1, EDA2 verfügbaren Drehzahlverhältnisse sind schraffiert dargestellt. Dabei ist gut zu erkennen, dass der erste elektrodynamische Betriebsmodus EDA1 für den Anfahrvorgang in Vorwärtsrichtung von Nutzen ist, während der zweite elektrodynamische Betriebsmodus EDA2 für einen Anfahrvorgang in Rückwärtsrichtung von Nutzen ist.

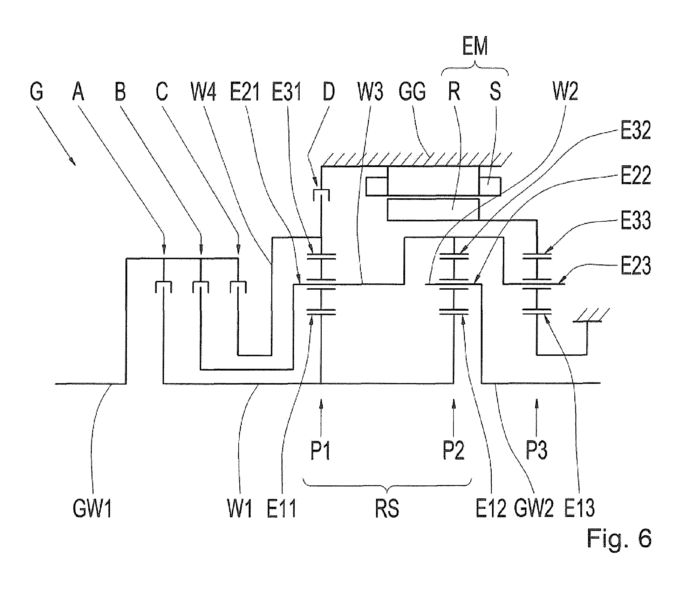

Figur 6 zeigt schematisch ein Getriebe G entsprechend eines dritten Ausführungsbeispiels der Erfindung. Im Unterschied zu den vorangegangenen Ausführungsbeispielen ist der Rotor R der elektrischen Maschine EM nun nicht mehr ständig mit der dritten Welle W3 des Radsatzes RS verbunden. Stattdessen weist das Getriebe G gemäß dem dritten Ausführungsbeispiel einen dritten Planetenradsatz P3 auf, welcher ein erstes Element E13, ein zweites Element E23, und ein drittes Element E33 aufweist. Das erste Element E13 des dritten Planetenradsatzes P3 ist durch ein Sonnenrad gebildet und ist ständig drehfest festgesetzt. Das zweite Element E23 des dritten Planetenradsatzes P3 ist durch einen Steg gebildet und ist mit der dritten Welle W3 des Radsatzes RS ständig verbunden. Das dritte Element E33 des dritten Planetenradsatzes P3 ist mit dem Rotor R der elektrischen Maschine EM ständig verbunden. Durch den dritten Planetenradsatz P3 wird eine Drehzahlanpassung zwischen der dritten Welle W3 und dem Rotor R vorgenommen, wobei weiterhin ein festes Übersetzungsverhältnis zwischen dritter Welle W3 und Rotor R besteht.

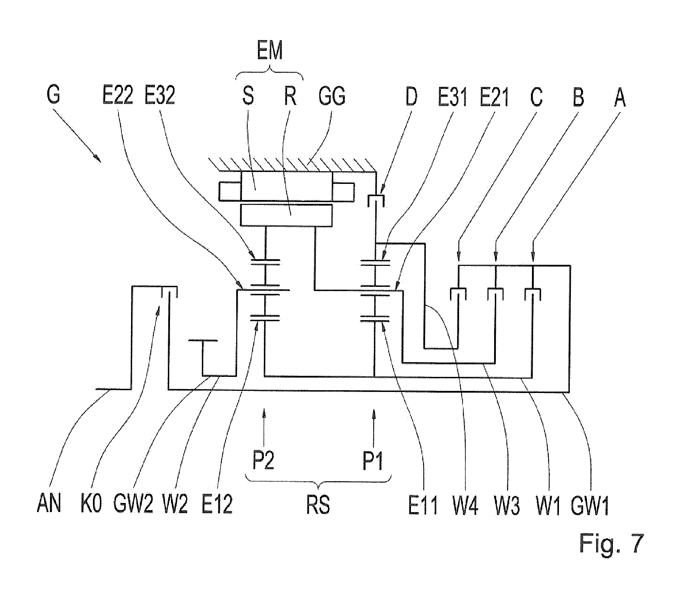

Figur 7 zeigt schematisch ein Getriebe G entsprechend eines vierten Ausführungsbeispiels der Erfindung, welche funktional identisch zum zweiten Ausführungsbeispiel ist. Lediglich die relative Anordnung der Komponenten des Getriebes G zueinander wurde verändert, so dass das Getriebe G gemäß dem vierten Ausführungsbeispiel für eine sogenannte Front-Quer-Anordnung geeignet ist. Darüber hinaus weist das Getriebe G ein fünftes Schaltelement KO auf, über welches die Antriebswelle GW1 mit einer Anschlusswelle AN verbindbar ist. Das fünfte Schaltelement KO ist optional. In gleicher Weise könnte Anschlusswelle AN und fünftes Schaltelement KO auch in den vorangegangenen Ausführungsbeispielen Anwendung finden.

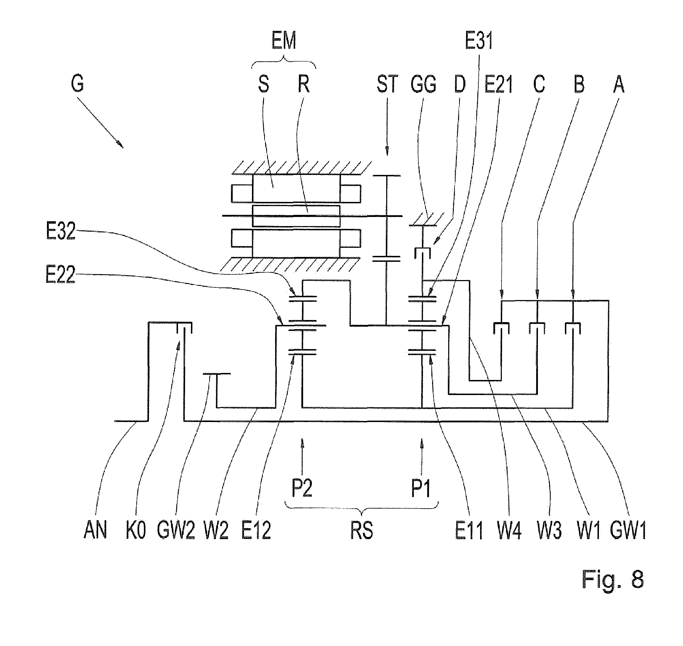

Figur 8 zeigt schematisch ein Getriebe G entsprechend eines fünften Ausführungsbeispiels der Erfindung. Im Unterschied zum vierten Ausführungsbeispiel weist das Getriebe G gemäß dem fünften Ausführungsbeispiel einen Stirnradsatz ST auf, über den der Rotor R der elektrischen Maschine EM an die dritte Welle W3 des Radsatzes RS angebunden ist. Die Drehachse des Rotors R ist dabei achsparallel zur Hauptachse des Getriebes G angeordnet.

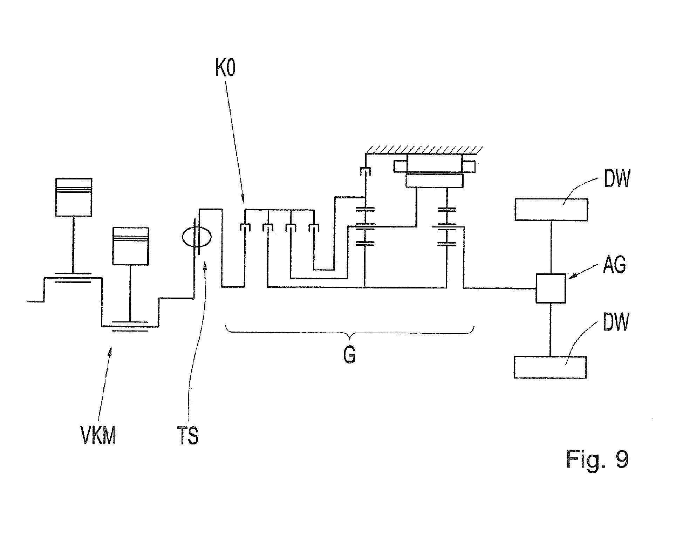

Figur 9 zeigt einen Antriebsstrang eines Hybridfahrzeugs mit einem Getriebe G gemäß dem zweiten Ausführungsbeispiel, welches das fünfte Schaltelement KO umfasst. Dies ist lediglich beispielhaft anzusehen. Der Antriebsstrang könnte mit jedem der angeführten Ausführungsbeispiele des Getriebes G ausgeführt sein. Der Antriebsstrang weist eine Verbrennungskraftmaschine VKM auf, die über einen Torsionsschwingungsdämpfer TS mit der Anschlusswelle AN des Getriebes G verbunden ist. Die Abtriebswelle GW2 des Getriebes G ist mit einem Achsgetriebe AG antriebswirkverbunden. Vom Achsgetriebe AG ausgehend wird die Leistung, die an der Abtriebswelle GW2 anliegt, auf Räder DW des Kraftfahrzeugs verteilt. Ist das fünfte Schaltelement KO geschlossen, so treibt die Verbrennungskraftmaschine VKM über die Anschlusswelle AN die Antriebswelle GW1 des Getriebes G an. Dadurch ist sowohl ein verbrennungsmotorischer Betrieb, als auch ein hybridischer Betrieb des Antriebsstrangs möglich. Ist das fünfte Schaltelement KO geöffnet, so kann die elektrische Maschine EM des Getriebes G den Antrieb übernehmen. -

### Bezugszeichen

- G: Getriebe
- GW1: Antriebswelle
- GW2: Abtriebswelle
- AN: Anschlusswelle
- GG: Gehäuse
- EM: Elektrische Maschine
- S: Stator
- R: Rotor
- n: Drehzahl
- RS: Radsatz
- W1: Erste Welle
- W2: Zweite Welle
- W3: Dritte Welle
- W4: Vierte Welle
- P1: Erster Planetenradsatz
- E11: Sonnenrad des ersten Planetenradsatzes
- E21: Steg des ersten Planetenradsatzes
- E31: Hohlrad des ersten Planetenradsatzes
- P2: Zweiter Planetenradsatz
- E12: Sonnenrad des zweiten Planetenradsatzes
- E22: Steg des zweiten Planetenradsatzes
- E32: Hohlrad des zweiten Planetenradsatzes
- P3: Dritter Planetenradsatz
- E13: Erstes Element des dritten Planetenradsatzes
- E23: Zweites Element des dritten Planetenradsatzes
- E33: Drittes Element des dritten Planetenradsatzes
- A: Erstes Schaltelement
- B: Zweites Schaltelement
- D: Drittes Schaltelement
- C: Viertes Schaltelement
- K0: Fünftes Schaltelement
- G1-G3: Erster bis dritter Vorwärtsgang
- EDA1: Erster elektrodynamischer Betriebsmodus
- EDA2: Zweiter elektrodynamischer Betriebsmodus
- E1: Erster elektrischer Gang
- E2: Zweiter elektrischer Gang
- GEN: Standladebetriebsmodus
- DW: Räder
- AG: Achsgetriebe
- ST: Stirnradsatz
- VKM: Verbrennungskraftmaschine
- TS: Torsionsschwingungsdämpfer

## Patentansprüche

1. Getriebe (G) für ein Hybridfahrzeug, wobei das Getriebe (G) eine Antriebswelle (GW1), eine Abtriebswelle (GW2), eine elektrische Maschine (EM) mit einem drehfesten Stator (S) und einem drehbaren Rotor (R), einen Radsatz (RS) mit einem ersten und einem zweiten Planetenradsatz (P1, P2), welche zusammen vier in der Reihenfolge ihrer Drehzahlordnung als erste, zweite, dritte und vierte Welle bezeichnete Wellen (W1, W2, W3, W4) aufweisen, sowie zumindest ein erstes, zweites, und drittes Schaltelement (A, B, D) aufweist,
- wobei durch selektives paarweises Schließen der Schaltelemente (A, B, D) eine Mehrzahl an Vorwärtsgängen (G1-G3) zwischen den Antriebswelle (GW1) und der Abtriebswelle (GW2) schaltbar sind,
- wobei die Antriebswelle (GW1) über das erste Schaltelement (A) mit der ersten Welle (W1) und über das zweite Schaltelement (B) mit der dritten Welle (W3) verbindbar ist,
- wobei die zweite Welle (W2) mit der Abtriebswelle (GW2) ständig drehfest verbunden ist,
- wobei die vierte Welle (W4) über das dritte Schaltelement (D) drehfest festsetzbar ist, und
- wobei der Rotor (R) der elektrischen Maschine (EM) mit der dritten Welle (W3) über ein festes Übersetzungsverhältnis ständig wirkverbunden ist.

2. Getriebe (G) nach Anspruch 1, **dadurch gekennzeichnet, dass** erster und zweiter Planetenradsatz (P1, P2) als Minus-Radsätze ausgebildet sind,
- wobei ein Sonnenrad (E11) des ersten Planetenradsatzes (P1) und ein Sonnenrad (E12) des zweiten Planetenradsatzes (P2) Bestandteile der ersten Welle (W1) sind,
- wobei ein Steg (E22) des zweiten Planetenradsatzes (P2) Bestandteil der zweiten Welle (W2) ist,
- wobei ein Steg (E21) des ersten Planetenradsatzes (P1) und ein Hohlrad (E32) des zweiten Planetenradsatzes (P2) Bestandteile der dritten Welle (W3) sind, und
- wobei ein Hohlrad (E31) des ersten Planetenradsatzes (P1) Bestandteil der vierten Welle (W4) ist.

3. Getriebe (G) nach Anspruch 1 oder Anspruch 2, **dadurch gekennzeichnet, dass** die feste Übersetzung der ständigen Wirkverbindung zwischen der dritten Welle (W3) und dem Rotor (R) der elektrischen Maschine (EM) durch eine ständig drehfeste Verbindung oder durch zumindest einen Stirnradsatz (ST) ausgebildet ist.

4. Getriebe (G) nach Anspruch 1 oder Anspruch 2, **dadurch gekennzeichnet, dass** die feste Übersetzung der ständigen Wirkverbindung zwischen der dritten Welle (W3) und dem Rotor (R) der elektrischen Maschine (EM) durch einen dritten Planetenradsatz (P3) ausgebildet ist, welcher ein erstes, zweites und drittes Element (E13, E23, E33) aufweist,
- wobei das erste Element (E11) durch ein Sonnenrad des dritten Planetenradsatzes (P3) gebildet ist, wobei das zweite Element (E23) im Falle eines Minus-Radsatzes durch einen Steg und im Falle eines Plus-Radsatzes durch ein Hohlrad des dritten Planetenradsatzes (P3) gebildet ist, wobei das dritte Element (E33) im Falle eines Minus-Radsatzes durch das Hohlrad und im Falle eines PlusRadsatzes durch den Steg des dritten Planetenradsatzes (P1 P3) gebildet ist,
- wobei die zweite Welle (W2) ständig mit dem zweiten Element (E23) des dritten Planetenradsatzes (P3) verbunden ist,
- wobei der Rotor (R) entweder mit dem ersten oder mit dem dritten Element (E13 / E33) des dritten Planetenradsatzes (P3) ständig verbunden ist, und
- wobei das verbleibende Element (E33 / E13) des dritten Planetenradsatzes (P3) ständig drehfest festgesetzt ist.

5. Getriebe (G) nach Anspruch 4, **dadurch gekennzeichnet, dass** die Planetenradsätze (P1, P2, P3) in folgender axialer Reihenfolge angeordnet sind: erster Planetenradsatz (P1), zweiter Planetenradsatz (P2), dritter Planetenradsatz (P3).

6. Getriebe (G) nach einem der vorangehenden Ansprüche, **dadurch gekennzeichnet, dass** durch selektives paarweises Schließen der drei Schaltelemente (A, B, D) insgesamt drei Vorwärtsgänge (G1-G3) zwischen der Antriebswelle (GW1) und der Abtriebswelle (GW2) schaltbar sind, wobei sich
- der erste Vorwärtsgang (G1) durch Schließen des ersten Schaltelements (A) und des dritten Schaltelements (D),
- der zweite Vorwärtsgang (G2) durch Schließen des ersten Schaltelements (A) und des zweiten Schaltelements (B), und
- der dritte Vorwärtsgang (G3) durch Schließen des zweiten Schaltelements (A) und des dritten Schaltelements (D) ergibt.

7. Getriebe (G) nach einem der vorangehenden Ansprüche, **dadurch gekennzeichnet, dass** in einem ersten elektrodynamischen Betriebsmodus (EDA1) das erste Schaltelement (A) geschlossen ist und alle weiteren an der Gangbildung beteiligten Schaltelemente (B, D) geöffnet sind, wobei die an der Abtriebswelle (GW2) anliegende Drehzahl bei vorgegebener Drehzahl der Antriebswelle (GW1) durch Variation der Drehzahl des Rotors (R) stufenlos veränderbar ist.

8. Getriebe (G) nach einem der vorangehenden Ansprüche, **dadurch gekennzeichnet, dass** die Antriebswelle (GW1) über ein viertes Schaltelement (C) mit der vierten Welle (W4) verbindbar ist, wobei in einem zweiten elektrodynamischen Betriebsmodus (EDA2) das vierte Schaltelement (C) geschlossen ist und alle weiteren an der Gangbildung beteiligten Schaltelemente (A, B, D) geöffnet sind, wobei die an der Abtriebswelle (GW2) anliegende Drehzahl bei vorgegebener Drehzahl der Antriebwelle (GW1) durch Variation der Drehzahl des Rotors (R) stufenlos veränderbar ist.

9. Getriebe (G) nach einem der vorangehenden Ansprüche, **dadurch gekennzeichnet, dass** sich ein erster elektrischer Gang (E1) zwischen der dritten Welle (W3) und der Abtriebswelle (GW2) durch Schließen des ersten Schaltelements (A) und des zweiten Schaltelements (B) ergibt.

10. Getriebe (G) nach einem der vorangehenden Ansprüche, **dadurch gekennzeichnet, dass** sich ein zweiter elektrischer Gang (E2) zwischen der dritten Welle (W3) und der Abtriebswelle (GW2) durch Schließen des dritten Schaltelements (D) ergibt.

11. Getriebe (G) nach Anspruch 10, **dadurch gekennzeichnet, dass** im zweiten elektrischen Gang (E2) zusätzlich das erste Schaltelement (A) oder das zweite Schaltelement (B) geschlossen ist.

12. Getriebe (G) nach einem der vorangehenden Ansprüche, **dadurch gekennzeichnet, dass** das Getriebe (G) eine Anschlusswelle (AN) aufweist, wobei die Anschlusswelle über ein fünftes Schaltelement (K0) mit der Antriebswelle (GW1) verbindbar ist.

13. Getriebe (G) nach Anspruch 12, **dadurch gekennzeichnet, dass** in einem Standladebetriebsmodus (GEN) das fünfte Schaltelement (K0) und das zweite Schaltelement (B) geschlossen sind, und alle anderen an der Gangbildung beteiligten Schaltelemente (A, C, D) geöffnet sind.

14. Antriebsstrang für ein Hybridfahrzeug, wobei der Antriebsstrang eine Verbrennungskraftmaschine (VKM), ein Getriebe (G) nach Anspruch 12 sowie ein mit Rädern (DW) des Hybridfahrzeugs verbundenes Achsgetriebe (AG) aufweist, wobei die Anschlusswelle (AN) des Getriebes (G) über einen Torsionsschwingungsdämpfer (TS) mit der Verbrennungskraftmaschine (VKM) drehelastisch verbunden ist und die Abtriebswelle (GW2) des Getriebes (G) mit dem Achsgetriebe (AG) antriebswirkverbunden ist, wobei das Hybridfahrzeug bei geöffnetem fünftem Schaltelement (K0) in einem elektrischen Fahrbetrieb von der elektrischen Maschine (EM) allein antreibbar ist, wobei das Hybridfahrzeug bei geschlossenem fünftem Schaltelement (K0) in einem verbrennungsmotorischen Betrieb von der Verbrennungskraftmaschine (VKM) allein antreibbar ist und in einem hybridischen Betrieb von der Verbrennungskraftmaschine (VKM) und von der elektrischen Maschine (EM) antreibbar ist.
